# EUROPEAN PATENT APPLICATION

(11) **EP 1 455 477 A2**
(43) Date of publication of application: **08.09.2004**
(21) Application number: 04004999.1
(22) Date of filing: 03.03.2004
(51) Int. Cl.: H04L 5/00

(54) **Electronic apparatus with communication device**

(30) Priority: 04.03.2003 JP 2003057368
(71) Applicant: Kabushiki Kaisha Toshiba, Tokyo (JP)
(72) Inventor:
(74) Representative: Henkel, Feiler & Hänzel

(57) **Abstract**

An electronic apparatus includes a communication device (107) that executes communication with an external device (20), an input device (13, 15), a unit that selects one of a first communication mode and a second communication mode in accordance with an operation of the input device (13, 15), and a unit for, when the first communication mode is selected, controlling one-way communication to transmit content data from the communication device (107) to the external device (20) with a first quality and for, when the second communication mode is selected, controlling two-way communication to transmit and receive content data between the communication device (107) and the external device (20) with a second quality which is lower than the first quality.

## Description

The present invention relates to an electronic apparatus capable of transmitting content data to an external device.

In recent years, attention has been paid to Bluetooth™ as a wireless communication technology. Bluetooth™ is a low-cost, low-power-consumption, short-range wireless communication technology suitable for mobile devices. Bluetooth™ is used for mutual connection of various mobile information devices owned by individual users. The devices are wirelessly connected and, compared to conventional connection by wire, the devices can be connected more freely, simply and easily.

Jpn. Pat. Appln. KOKAI Publication No. 2002-112383 discloses a system wherein music data is transmitted from an electronic device such as a music player to headphones by means of radio signals.

In this system, however, no consideration is given to communication with a headset including a speaker and a microphone.

The headset including a speaker and a microphone is usable not only for music reproduction but also for, e.g. a conversation ("interaction") with a computer. In order to perform a conversation, transmission of audio data from the headset to the computer, as well as transmission of audio data from the computer to the headset, is required. Normally, the required quality of audio data for music reproduction differs from that for conversation.

As stated above, a necessary communication environment for the headset differs between the use for music reproduction and the use for conversation. In order to change the communication environment, however, various parameters have to be individually set and the operation for the setting is very difficult for the user.

The object of the present invention is to provide an electronic apparatus capable of easily switching the communication environment with an external device such as a headset, and a program for controlling communication of the electronic apparatus.

According to an embodiment of the present invention, there is provided an electronic apparatus with a communication device that executes communication with an external device, the apparatus comprising: an input device; means for selecting one of a first communication mode and a second communication mode in accordance with an operation of the input device; and means for, when the first communication mode is selected, controlling one-way communication to transmit content data from the communication device to the external device with a first quality and for, when the second communication mode is selected, controlling two-way communication to transmit and receive content data between the communication device and the external device with a second quality which is lower than the first quality.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an external appearance of a computer according to an embodiment of the present invention;
FIG. 2 shows an example of a communication mode select screen displayed on the computer of FIG. 1;
FIG. 3 illustrates a connection establishing process in an audio mode used in the computer of FIG. 1;
FIG. 4 illustrates a connection establishing process in a conversation mode used in the computer of FIG. 1;
FIG. 5 is a table for explaining the direction of streaming and the kind of CODEC in each of the audio mode illustrated in FIG. 3 and the conversation mode illustrated in FIG. 4;
FIG. 6 is a block diagram showing the system configuration of the computer of FIG. 1;
FIG. 7 is a block diagram showing the software scheme of the computer of FIG. 1;
FIG. 8 is a block diagram showing a system configuration of a headset that is wirelessly connected to the computer of FIG. 1; and
FIG. 9 is a flow chart illustrating the procedure of a communication control process that is executed by the computer of FIG. 1.

An embodiment of the present invention will now be described with reference to the accompanying drawings.

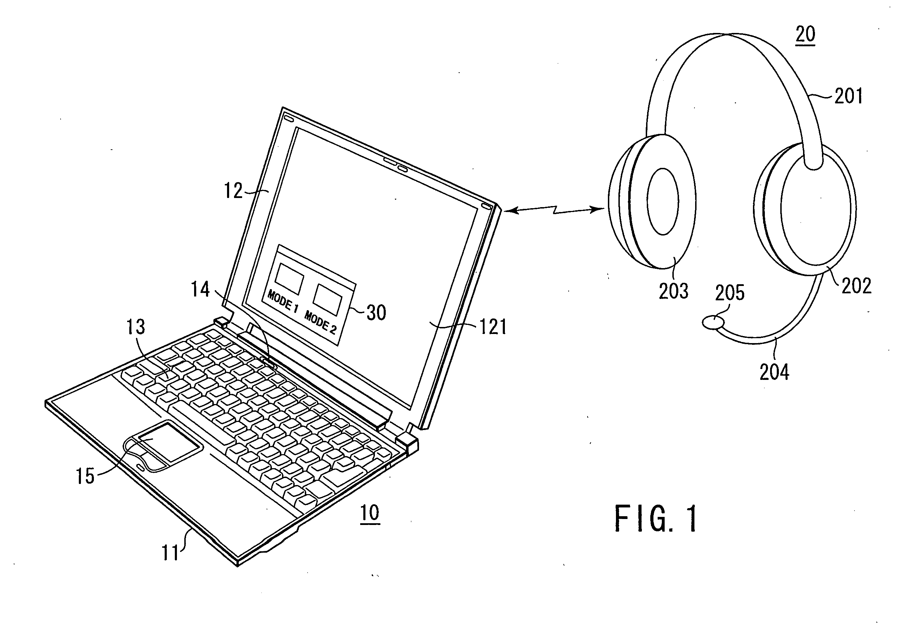

FIG. 1 shows the external appearance of an electronic apparatus 10 according to an embodiment of the invention. The electronic apparatus 10 is configured to be able to transmit a stream of content data such as music to an external device 20 by radio signals. In this embodiment, the electronic apparatus 10 is realized as a notebook-type personal computer, and the external device 20 is realized as a wireless headset.

The personal computer 10 is a portable information processing apparatus that can be powered by a battery. The personal computer 10 comprises a computer main body 11 and a display unit 12. A display device composed of an LCD (Liquid Crystal Display) 121 is built in the display unit 12. The LCD 121 is positioned at a substantially central area of the display unit 12.

The display unit 12 is attached to be rotatable between an open position and a closed position relative to the computer main body 11. The computer main body 11 has a thin box-shaped casing. A keyboard 13, a power button 14 for switching on/off the computer 10, a touch pad (pointing device) 15, etc. are disposed on the upper surface of the computer main body 11.

A wireless communication device is built in the computer main body 11. The wireless communication device enables the computer 10 to perform communication with the headset 20. The wireless communication device is configured to execute wireless communication according to Bluetooth™ standards.

A wireless utility program that is a program for controlling wireless communication with the headset 20 is installed in the computer 10. The wireless utility program controls communication between the computer 10 and headset 20. The wireless utility program has two communication modes for the communication with the headset 20, as is described below.

One is a communication mode (hereinafter referred to as "audio mode") for transmitting audio data such as music with high quality. The other is a communication mode (hereinafter "conversation mode") for transmitting and receiving audio data between the headset 20 and computer 10 with a quality of a voice call level ("speech quality").

The audio mode, which places importance on the quality of audio data, is a communication mode suited to the case where a user listens to audio data such as music sent from the computer 10, by using the headset 20. The conversation mode, which permits transmission and reception of audio data with a conversation quality, is a communication mode suited to, for example, the case where the user conducts an electronic conference via the computer 10 with terminals on the Internet, or the case where the user operates a voice recognition/synthesis program, which is executed on the computer 10, by using the headset 20.

In Bluetooth™, Advanced Audio Distribution Profile (A2DP) is specified as a profile relating to transmission of audio data. A2DP is a function for transmitting audio data such as music with high quality. In A2DP, an asynchronous data channel called ACL (Asynchronous Connectionless) is utilized.

Both the audio mode and the conversation mode may be realized by making use of A2DP.

When the wireless utility is activated, a mode select window 30 is displayed on the display screen of the LCD 121. The mode select window 30 is used to prompt the user to select one of the audio mode (mode 1) and the conversation mode (mode 2). In this case, an input device such as the keyboard 13 or touch pad 15 functions as a user interface unit. In accordance with the user's operation on the input device, the audio mode or the conversation mode is selected for communication with the headset 20.

When the audio mode is selected, the wireless utility program executes one-way communication for transmitting an audio data stream such as music with high quality from the computer 10 to the headset 20. In this case, a channel for transmitting the audio data stream from the computer 10 to the headset 20 is established, and one-way communication is executed via the channel.

The "one-way," in this context, means that the direction of transmission of the audio data stream is limited to the direction from the computer 10 to the headset 20. For example, control data such as acknowledgement (ACK), is sent from the headset 20 to the computer 10.

When the conversation mode is selected, the wireless utility program executes two-way communication for transmitting and receiving an audio data stream such as voice with conversation quality between the computer 10 and the headset 20. In this case, two independent channels are established between the computer 10 and headset 20. One channel is used to transmit an audio data stream with conversation quality from the computer 10 to the headset 20, and the other channel is used to transmit an audio data stream with conversation quality from the headset 20 to the computer 10.

The bandwidth of each channel established in the conversation mode is narrower than that of the channel established in the audio mode. In the conversation mode, the transmission quality of audio data is made lower than that in the audio mode, so two-way communication with a higher throughput can be executed.

The headset 20 is an output device for reproducing audio data such as music and voice, which is sent by radio from the computer 10, thereby producing sound corresponding to the audio data. The headset 20 includes a microphone 205. The user's voice signal input through the microphone 205 can be transmitted to the computer 10 by radio.

The headset 20 is configured to be wearable on the head of the user. The headset 20, as shown in FIG. 1, comprises a head arm 201, and two ear pads 202 and 203 provided at both ends of the head arm 201. Each ear pad 202, 203 incorporates a speaker. Each ear pad 202, 203 functions as a speaker unit.

In the state in which the headset 20 is worn on the head of the user, the two ear pads 202 and 203 cover the right and left ears of the user. One end of a microphone arm 204 is attached to the pad 202, and the other end thereof is provided with the microphone 205.

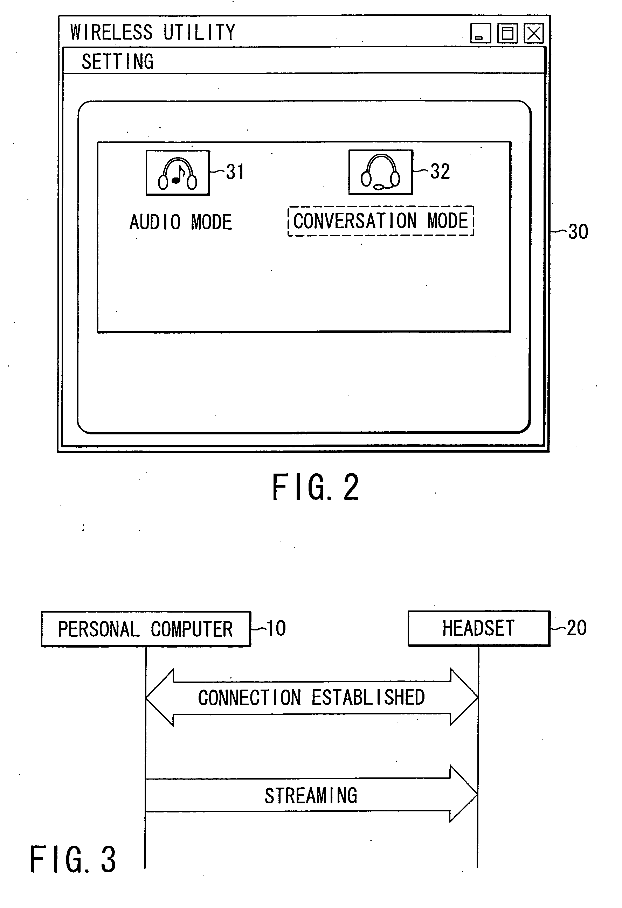

FIG. 2 shows a concrete example of the mode select window 30 presented by the wireless utility program.

The mode select window 30, as shown in FIG. 2, displays two icons 31 and 32 corresponding to the audio mode and conversation mode. The user clicks the icon 31 or icon 32 by operating the input device such as the keyboard 13 or touch pad 15.

Specifically, when the user has double-clicked the icon 31, the wireless utility program establishes connection between the computer 10 and headset 20 in the audio mode. When the user has double-clicked the icon 32, the wireless utility program establishes connection between the computer 10 and headset 20 in the conversation mode.

FIG. 3 illustrates a connection establishing process in the audio mode.

The wireless utility program controls a wireless communication device included in the computer 10, thereby starting the connection establishing process. In the connection establishing process, a procedure is executed for establishing one-way channel (transport channel) for transmitting audio data such as music from the computer 10 to the headset 20 with high quality.

In the connection establishing process, the wireless utility program executes negotiation with the headset 20 and sets communication conditions relating to audio transmission in both the computer 10 and headset 20, which are to function as stream end points of the transport channel.

The computer 10 functions as a source device for transmitting audio data via the established transport channel. The headset 20 functions as a sink device for receiving audio data that is transmitted via the established transport channel.

The setting of communication conditions is executed using parameter information that is preset according to the audio mode. The parameter information includes various parameter values such as the kind of CODEC (Compression/DECompression) to be applied to audio data that is to be transmitted, and the value of sampling frequency used in CODEC.

The parameter indicative of the kind of CODEC designates a compression-encoding scheme by which audio data to be transmitted is compressed and encoded. The value of sampling frequency designates a sampling frequency to be used in an encoder provided in the computer 10 and in a decoder provided in the headset 20.

Following the connection establishing process, a process (streaming) for transmitting audio data from the computer 10 to the headset 20 is started.

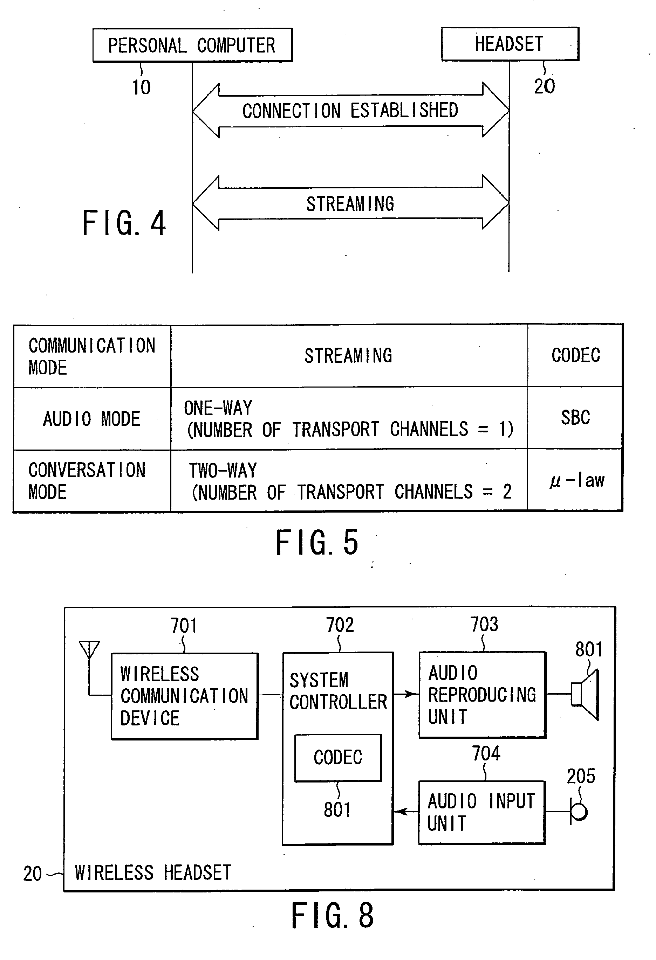

FIG. 4 illustrates a connection establishing process in the conversation mode.

The wireless utility program controls the wireless communication device included in the computer 10, thereby starting the connection establishing process. In the connection establishing process, a procedure is executed for establishing two transport channels for bidirectionally transferring audio data such as voice signals between the computer 10 and the headset 20.

In the connection establishing process, the wireless utility program executes negotiation with the headset 20 and sets, for the respective transport channels, communication conditions relating to audio transmission in both the computer 10 and headset 20 that are to function as stream end points of each of the transport channels.

As regards one of the two transport channels, the computer 10 functions as a source device for transmitting audio data via the transport channel, and the headset 20 functions as a sink device for receiving audio data that is transmitted via this transport channel. As regards the other transport channel, the headset 20 functions as a source device and the computer 10 functions as a sink device.

The setting of communication conditions is executed using parameter information that is preset according to the conversation mode. The parameter information includes various parameter values such as the kind of CODEC (Compression/DECompression) to be applied to audio data that is to be transmitted, and the value of sampling frequency used in CODEC.

Following the connection establishing process, a process for transmitting audio data from the computer 10 to the headset 20 and a process for transmitting audio data from the headset 20 to the computer 10 can simultaneously be executed.

FIG. 5 shows the direction of streaming and the kind of CODEC in each of the audio mode and conversation mode.

In the audio mode, transmission of an audio data stream is executed only in one direction and the kind of CODEC used in the streaming is, e.g. low-compression SBC (Subband Codec). SBC is a compression-encoding/decoding scheme for music data, and a relatively large amount of arithmetic operations are needed for the processing of SBC. SBC, however, realizes sound reproduction with a sufficiently high quality on the receiving side. In the audio mode, the microphone 205 is not used, so no audio data is transmitted from the headset 20 to the computer 10. Thus, even if SBC that requires a large amount of arithmetic operations is used, the headset 20 can decode and reproduce in real time a stream of audio data such as music that is received from the computer 10.

In the conversation mode, two-way transmission of audio data streams is executed. The kind of CODEC used in the streaming in each direction is a compression-encoding scheme for voice signals, such as µ-law. Compared to SBC, µ-law requires a less amount of arithmetic operations. Therefore, the headset 20 can decode and reproduce in real time a stream of audio data such as voice signals that are received from the computer 10, and at the same time it can compression-encodes a voice signal input from the microphone 205 and transmit in real time the compression-encoded voice signal to the computer 10.

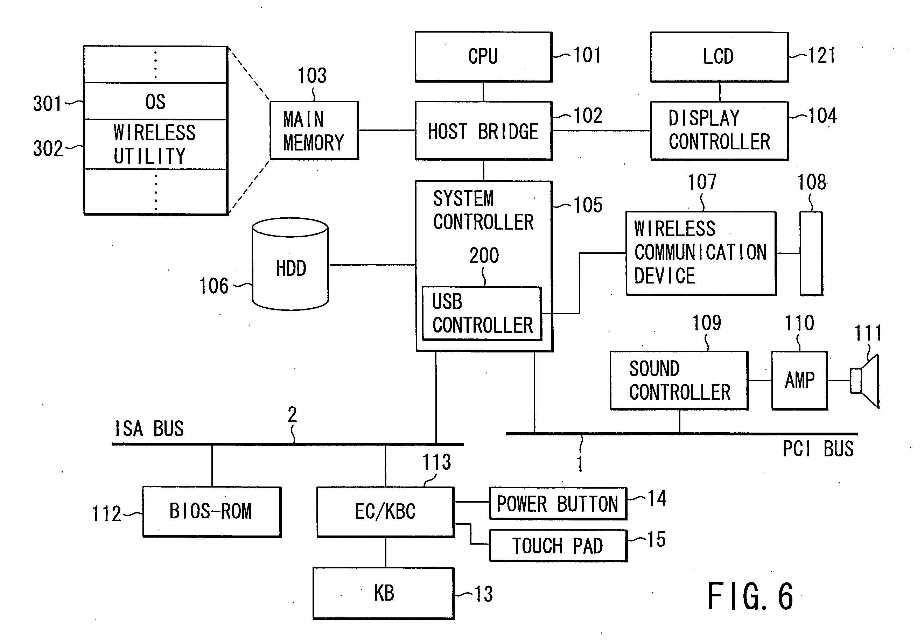

The system configuration of the computer 10 will now be described with reference to FIG. 6.

The computer 10, as shown in FIG. 6, comprises a CPU 101, a host bridge 102, a main memory 103, a display controller 104, a system controller 105, a hard disk drive (HDD) 106, a wireless communication device 107, a sound controller 109, an audio amplifier 110, a speaker 111, a BIOS-ROM 112, and an embedded controller/keyboard controller IC (EC/KBC) 113.

The CPU 101 is a processor provided to control the operations of the computer 10. The CPU 101 executes an operating system (OS) 301 and various application/utility programs loaded in the main memory 103 from the hard disk drive (HDD) 106. The CPU 101 also executes a BIOS (Basic Input/Output System) stored in the BIOS-ROM 112.

In the computer 10, a wireless utility program 302 is pre-installed as one of utility programs. The wireless utility program 302 controls communication between the wireless communication device 107 and the headset 20 in the audio mode or in the conversation mode.

The host bridge 102 is a bridge device that connects the local bus of the CPU 101 and the system controller 105. The host bridge 102 includes a memory controller that controls access to the main memory 103. The display controller 104 controls the LCD 121 used as a display monitor of the computer 1.

The system controller 105 controls each device on a PCI (Peripheral Component Interconnect) bus 1 and each device on an ISA (Industry Standard Architecture) bus 2. The system controller 105 includes an IDE (Integrated Drive Electronics) controller for controlling the HDD 106. The system controller 105 also includes a USB (Universal Serial Bus) controller 200. The wireless communication device 107 is connected to the USB controller 200.

The wireless communication device 107 is a device for executing wireless communication and includes a baseband unit and an RF (Radio Frequency) unit. The RF unit performs transmission/reception of a radio signal via an antenna (ANT) 108. The wireless communication device 107 is configured to execute wireless communication according to Bluetooth™ standards.

The sound controller 109 is a device for reproducing audio data. An audio signal output from the sound controller 109 is delivered to the speaker 111 via the audio amplifier (AMP) 110. The speaker 111 produces the audio signal as sound.

The embedded controller/keyboard controller IC (EC/KBC) 113 is a one-chip microcomputer in which an embedded controller for power management and a keyboard controller for controlling the keyboard (KB) 13 and touch pad 15 are integrated. The keyboard (KB) 13 and touch pad 15 are user interface units that can be operated by the user. The keyboard (KB) 13 and touch pad 15 are used for inputting various data and selecting the communication mode. In addition, the embedded controller/keyboard controller IC (EC/KBC) 113 has a function of powering on/off the computer 10 in accordance with the operation of the power button 14 by the user.

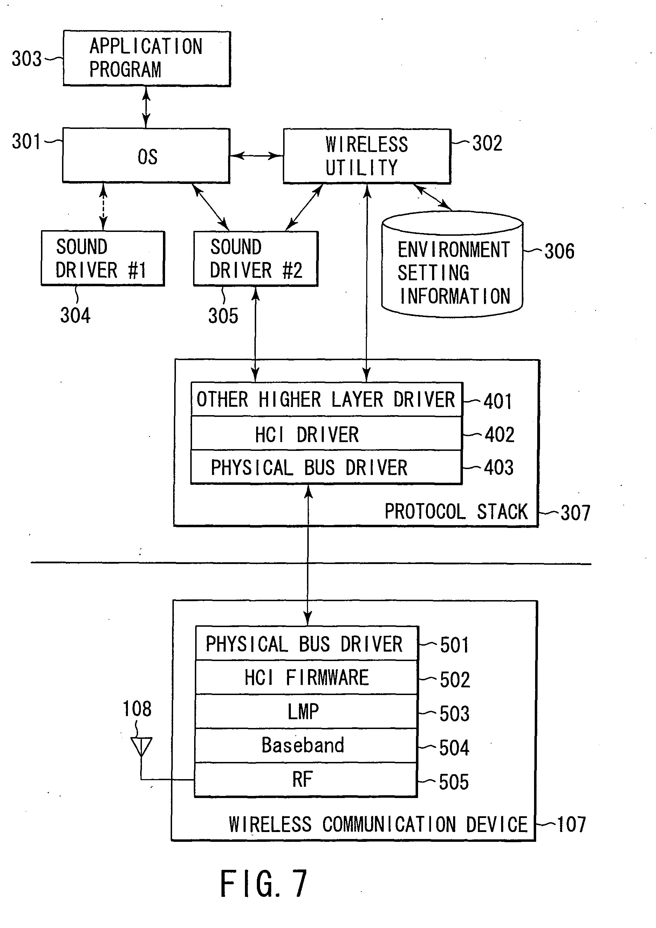

The scheme of software for controlling the wireless communication device 107 is described referring to FIG. 7.

The wireless communication device 107 comprises a hardware logic (baseband unit 504, RF unit 505) and firmware for controlling the hardware logic. The firmware includes a physical BUS driver 501, an HCI (Host Control Interface) firmware 502, and an LMP (Link Management Protocol) 503. The BUS driver 501 is a driver for connecting the wireless communication device 107 to a bus such as a USB. The HCI firmware 502 is a driver for communication with the host (computer 10) via the BUS driver 501. The LMP 503 is a driver for controlling a physical wireless link.

As programs for controlling the wireless communication device 107, protocol drivers 307 that constitute a protocol stack, as well as the aforementioned wireless utility program 302, are installed in the computer 10.

The protocol drivers 307 include a higher layer driver 401 for executing an A2DP function, an HCI driver 402 for executing communication with the wireless communication device 107, and a physical BUS driver 403 for controlling the bus such as a USB, to which the wireless communication device 107 is connected.

The wireless utility program 302 controls the wireless communication device 107 via the protocol drivers 307, thereby controlling transfer of an audio data stream between the headset 20 and computer 10. In the connection establishing process for this streaming, the wireless utility program 302 establishes a transport channel between the headset 20 and computer 10 in accordance with the content of an environment setting information file 306. The environment setting information file 306 prestores parameter information for the audio mode and parameter information for the conversation mode.

Audio data reproduced by various application programs 303 is delivered to a first sound driver 304 or a second sound driver 305 via the OS 301. The first sound driver 304 is a driver for controlling the sound controller 109. The first sound driver 304 is used to produce sound from the built-in speaker 111 via the sound controller 109. The second sound driver 305 is a driver for transmitting audio data to the wireless communication device 107 via the protocol drivers 307.

The wireless utility program 302 loads the second sound driver 305 in the main memory 103, thereby to send audio data to the headset 20 by radio. The second sound driver 305 has a higher priority than the first sound driver 304. After the second sound driver 305 is loaded, the second sound driver 305, in place of the first sound driver 304, is used by the OS 301. Accordingly, all audio data reproduced by the application programs 303 and OS 302 is sent to the second sound driver 305.

The second sound driver 305 has a CODEC associated with both SBC and µ-law. The second sound driver 305 compression-encodes transmission data by using a compression-encoding scheme designated by the wireless utility program 302. The value of sampling frequency used in the compression-encoding process is also designated by the wireless utility program 302.

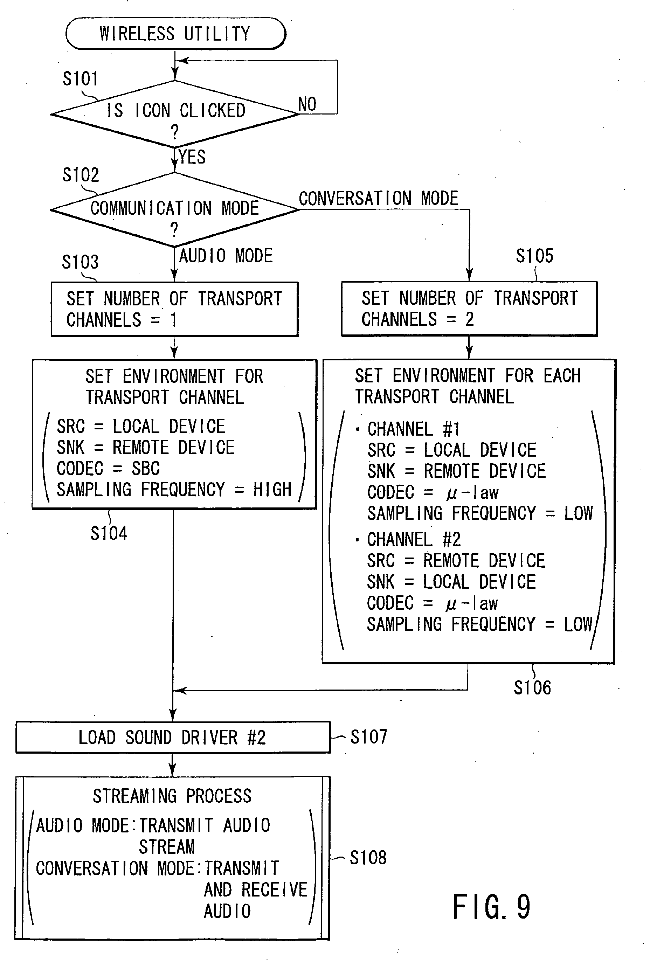

Referring now to FIG. 8, the system configuration of the headset 20 is described.

The headset 20, as shown in FIG. 8, comprises a wireless communication device 701, a system controller 702, an audio reproducing unit 703, and an audio input unit 704.

The system controller 702 is a processor provided to control the operations of the headset 20. The system controller 702 controls the wireless communication device 701, audio reproducing unit 703 and audio input unit 704. The system controller 702 has a "source" function of the aforementioned A2DP and a "sink" function of the A2DP. The system controller 702 includes a CODEC 801 associated with both SBC and µ-law.

The wireless communication device 701, like the wireless communication device 107 of computer 10, executes wireless communication on the basis of a procedure according to Bluetooth™ standards.

The audio reproducing unit 703 executes a data reproduction process for streaming reproduction. That is, in this process, while receiving an audio data stream sent from the computer 10 via the wireless communication device 701 and system controller 702, the audio reproducing unit 703 converts the audio data stream to an electric signal that can be output as sound from the speaker 801 built in each pad 202, 203. The audio input unit 704 converts an analog voice signal input from the microphone 205 to a digital signal, and delivers it to the system controller 702.

Next, referring to a flow chart of FIG. 9, a communication control process that is executed by the wireless utility program 302 is described.

As has been described above, when the wireless utility program 302 is activated, the mode select window shown in FIG. 2 is displayed on the LCD 121. If the icon 31 or 32 on the mode select window 30 is double-clicked by the user's operation on the keyboard 13 or touch pad 15 (YES in step S101), the wireless utility program 302 selects one of the audio mode and conversation mode in accordance with the double-clicked icon 31 or 32 (step S102).

If the audio mode is selected, the wireless utility program 302 sets the number of transport channels to be established to be 1 (step S103). The wireless utility program 302 performs environment setting for the transport channel, thereby establishing the transport channel for transmitting an audio stream from the computer 10 to the headset 20 (step S104).

In step S104, the wireless utility program 302 executes negotiation with the headset 20 in accordance with the audio mode parameter information stored in the environment setting information file 306, and sets communication conditions (value of sampling frequency, kind of CODEC, etc.) in the computer 10 (wireless communication device 107) and headset 20 (wireless communication device 701) functioning as stream end points. The setting of the communication conditions is executed via a control channel established between the computer 10 and headset 20.

The role of the sink (SNK) device is assigned to the remote device, that is, the headset 20. The role of the source (SRC) device is assigned to the local device, that is, the computer 10.

The processing in step S104 establishes the one-way transport channel that is configured to transmit with high quality the audio data such as music from the computer 10 to the headset 20. CODEC is SBC, and the value of sampling frequency used in the SBC is sufficiently high. Consequently, the established transport channel has a sufficient bandwidth suited for high-quality transmission.

Then, the wireless utility program 302 loads the second sound driver 305 (step S107), and informs the headset 20 of the start of streaming, thus executing a streaming process (step S108). In step S108, a stream of audio data such as music is transmitted from the computer 10 to the headset 20.

On the other hand, when the conversation mode is selected, the wireless utility program 302 sets the number of transport channels to be established to be 2 (step S105). The wireless utility program 302 performs environment setting for each of the two transport channels, thereby establishing the transport channel (channel #1) configured to transmit an audio stream from the computer 10 to the headset 20 with conversation quality and the transport channel (channel #2) configured to transmit an audio stream from the headset 20 to the computer 10 with conversation quality (step S106).

In step S106, the wireless utility program 302 executes negotiation with the headset 20 in accordance with the conversation mode parameter information stored in the environment setting information file 306, and sets communication conditions (value of sampling frequency, kind of CODEC, etc.) in the computer 10 (wireless communication device 107) and headset 20 (wireless communication device 701) functioning as stream end points. The setting of the communication conditions is individually executed for each of the transport channels.

As regards the channel #1, the role of the sink (SNK) device is assigned to the remote device, that is, the headset 20, and the role of the source (SRC) device is assigned to the local device, that is, the computer 10. On the other hand, as regards the channel #2, the role of the sink (SNK) device is assigned to the local device, that is, the computer 10, and the role of the source (SRC) device is assigned to the remote device, that is, the headset 20.

The CODEC for each channel is µ-law, and the value of sampling frequency used in the µ-law is relatively low. Consequently, each of the established transport channels has a narrower bandwidth than the bandwidth of the transport channel established in the audio mode. In other words, in the conversation mode, the low sampling frequency and µ-law are used, and thus the quality of audio data becomes lower than that in the audio mode. However, the load on CODEC becomes lower and two-way communication with a higher throughput is realized.

Then, the wireless utility program 302 loads the second sound driver 305 (step S107), and informs the headset 20 of the start of streaming, thus executing a streaming process (step S108). In step S108, the use of the two transport channels enables simultaneous transmission of audio data from the computer 10 to headset 20 and from the headset 20 to computer 10.

According to the present embodiment, as described above, simple clicking of the icon on the display screen can effect switching between the two communication modes, i.e. the audio mode and conversation mode. Thereby, wireless communication environments suited for music reproduction and conversation (two-way communication) can be configured. Specifically, in the audio mode, content data is transmitted with high quality. In the conversation mode, the transmission quality of content data is made lower than that in the audio mode, whereby the two-way communication can be performed with a higher throughput. It is possible, therefore, to execute communication with the headset 20 in the communication environment suited to the mode of use of the headset 20, such as music reproduction or conversation.

The switching between the two communication modes, i.e. the audio mode and conversation mode, can be effected only by the key operation on the keyboard 13, by defining the combinations of keys corresponding to the audio mode and the conversation mode. The input device for designating the communication mode to be executed is not limited to the keyboard or pointing device. A dedicated operation button for designating the communication mode may be used.

The same compression-encoding scheme may be used for both the audio mode and conversation mode. In this case, too, the value of sampling frequency for sampling audio data to be transmitted is made lower in the conversation mode than in the audio mode, whereby a sufficiently high throughput can be obtained in the conversation mode.

The values of parameter information corresponding to each of the audio mode and conversation mode can be altered by the user operation. Needless to say, two sampling frequency values, that is, a high sampling frequency value and a low sampling frequency value, may be prepared for each communication mode, and the user may operate the input device to automatically switch the value of sampling frequency to be used. Thereby, even in the same communication mode, the bit rate of an audio data stream to be transmitted can be altered.

All the communication control processes associated with the audio mode and conversation mode are realized by the computer program. Therefore, the same advantages as with the present embodiment can easily be obtained by simply installing the computer program in a computer with a wireless communication function, using a computer-readable storage medium storing this computer program.

## Claims

1. An electronic apparatus with a communication device (107) that executes communication with an external device (20), the apparatus **characterized by** comprising;
an input device (13, 15);
means for selecting one of a first communication mode and a second communication mode in accordance with an operation of the input device (13, 15); and
means for, when the first communication mode is selected, controlling one-way communication to transmit content data from the communication device (107) to the external device (20) with a first quality and for, when the second communication mode is selected, controlling two-way communication to transmit and receive content data between the communication device (107) and the external device (20) with a second quality which is lower than the first quality.

2. The electronic apparatus according to claim 1, **characterized by** further comprising:
a display device (121); and
means for displaying a first icon and a second icon corresponding to the first communication mode and the second communication mode, respectively, on a display screen of the display device(121),
wherein the selecting means includes means for selecting the first communication mode when the first icon is selected by an operation of the input device (13, 15), and selecting the second communication mode when the second icon is selected by an operation of the input device (13, 15).

3. The electronic apparatus according to claim 1, **characterized in that** the controlling means includes means for controlling communication between the communication device (107) and the external device (20) such that content data compression-encoded by a first compression-encoding scheme is transmitted from the communication device (107) to the external device (20) when the first communication mode is selected, and content data compression-encoded by a second compression-encoding scheme is transmitted and received between the communication device (107) and the external device (20) when the second communication mode is selected.

4. The electronic apparatus according to claim 1, **characterized in that** the controlling means includes means for controlling communication between the communication device (107) and the external device (20) such that content data sampled with a first sampling frequency is transmitted from the communication device (107) to the external device (20) when the first communication mode is selected, and content data sampled with a second sampling frequency, which is lower than the first sampling frequency, is transmitted and received between the communication device (107) and the external device (20) when the second communication mode is selected.

5. The electronic apparatus according to claim 1, **characterized by** further comprising means for storing first parameter information indicative of a kind of compression-encoding to be used in the first communication mode and a value of a sampling frequency used in the compression-encoding, and second parameter information indicative of a kind of compression-encoding to be used in the second communication mode and a value of a sampling frequency used in this compression-encoding,
wherein the controlling means includes means for setting communication conditions for the one-way communication in the communication device (107) and the external device (20) in accordance with the first parameter information when the first communication mode is selected, and setting communication conditions for the two-way communication in the communication device (107) and the external device (20) in accordance with the second parameter information when the second communication mode is selected.

6. The electronic apparatus according to claim 1, **characterized in that** the external device (20) is a headset including a speaker and a microphone,
the electronic apparatus further comprises means for storing first parameter information indicative of communication conditions for transmitting audio data with the first quality and second parameter information indicative of communication conditions for transmitting audio data with the second quality, and
the controlling means includes means for setting communication conditions for the one-way communication in the communication device (107) and the external device (20) in accordance with the first parameter information when the first communication mode is selected, and setting communication conditions for the two-way communication in the communication device (107) and the external device (20) in accordance with the second parameter information when the second communication mode is selected.

7. A program for controlling communication with an external device (20), which is stored in a computer-readable medium and executed by a computer (10), **characterized by** comprising:
causing the computer (10) to select one of a first communication mode and a second communication mode in accordance with an operation of an input device (13, 15) of the computer (10); and
causing the computer (10) to execute one-way communication to transmit content data from the computer (10) to the external device (20) with a first quality when the first communication mode is selected; and
causing the computer (10) to execute two-way communication to transmit and receive content data between the computer (10) and the external device (20) with a second quality, which is lower than the first quality, when the second communication mode is selected.

8. The program according to claim 7, **characterized by** further comprising:
causing the computer (10) to display a first icon and a second icon corresponding to the first communication mode and the second communication mode, respectively, on a display device of the computer (10),
wherein the selecting includes causing the computer (10) to select the first communication mode when the first icon is selected by an operation of the input device (13, 15), and causing the computer (10) to select the second communication mode when the second icon is selected by an operation of the input device (13, 15).

9. The program according to claim 7, **characterized in that** the executing of the one-way communication includes causing the computer (10) to transmit content data compression-encoded by a first compression-encoding scheme to the external device (20), and
the executing of the two-way communication includes causing the computer (10) to transmit and receive content data compression-encoded by a second compression-encoding scheme between the computer (10) and the external device (20).

10. The program according to claim 7, **characterized in that** the executing of the one-way communication includes causing the computer (10) to transmit content data sampled with a first sampling frequency to the external device (20), and
the executing of the two-way communication includes causing the computer (10) to transmit and receive content data sampled with a second sampling frequency, which is lower than the first sampling frequency, between the computer (10) and the external device (20).

11. The program according to claim 7, **characterized in that** the executing of the one-way communication includes causing the computer (10) to execute the one-way communication in accordance with first parameter information indicative of a kind of compression-encoding to be used in the first communication mode and a value of a sampling frequency used in the compression-encoding, and
the executing of the two-way communication includes causing the computer (10) to execute the two-way communication in accordance with second parameter information indicative of a kind of compression-encoding to be used in the second communication mode and a value of a sampling frequency used in this compression-encoding.

12. The program according to claim 7, **characterized in that** the external device (20) is a headset including a speaker and a microphone,
the executing of the one-way communication includes causing the computer (10) to execute the one-way communication in accordance with first parameter information indicative of communication conditions for transmitting audio data with the first quality, and
the executing of the two-way communication includes causing the computer (10) to execute the two-way communication in accordance with second parameter information indicative of communication conditions for transmitting audio data with the second quality.
